# FASCICULE DE BREVET EUROPEEN

(11) **EP 3 439 905 B1**
(45) Date de publication et mention de la délivrance du brevet: **02.09.2020**
(21) Numéro de dépôt: 17717477.8
(22) Date de dépôt: 24.03.2017
(51) Int. Cl.: B60K 13/04, B60K 1/04, B60R 16/04, B60K 15/063

(54) **AGENCEMENT DE SOUBASSEMENT DE VÉHICULE AUTOMOBILE HYBRIDE RECHARGEABLE**
UNTERBODENANORDNUNG FÜR EIN WIEDERAUFLADBARES HYBRIDKRAFTFAHRZEUG
UNDERBODY ARRANGEMENT FOR A RECHARGEABLE HYBRID MOTOR VEHICLE

(30) Priorité: 06.04.2016 FR 1653010
(43) Date de publication de la demande: 13.02.2019
(73) Titulaire: Renault S.A.S., 92100 Boulogne-Billancourt (FR)
(72) Inventeur: JUHE, Philippe, 78300 Poissy (FR)
(86) Numéro de dépôt international: PCT/FR2017/050689
(87) Numéro de publication internationale: WO 2017/174893

(56) Documents cités:
- EP-A1- 2 050 663
- DE-A1-102010 007 414
- DE-A1-102011 081 836
- DE-A1-102012 013 790

## Description

L'invention concerne un agencement de soubassement pour un véhicule hybride rechargeable (PHEV en anglais pour « Plug-in Hybrid Electric Vehicle), qui est un type de véhicule hybride électrique dont les batteries peuvent être rechargées par branchement à une source d'énergie extérieure. Un soubassement de véhicule hybride est par exemple connu de EP2305502A1.

Classiquement, un soubassement de véhicule, également appelée « structure sous caisse » comporte au moins une partie avant et une partie arrière. La partie arrière est délimitée par deux longerons arrière sensiblement parallèles s'étendant sensiblement longitudinalement sous l'habitacle et qui sont notamment prévus pour supporter le plancher de chargement du véhicule. Les longerons arrière permettent de rigidifier la structure du véhicule et forment une voie arrière d'absorption d'efforts lors de chocs arrière. Ainsi, ils sont susceptibles de s'écraser sur une longueur plus ou moins importante lors d'un choc arrière. Par ailleurs, plusieurs organes sensibles d'un véhicule hybride rechargeable tels que le réservoir à carburant, la batterie basse tension (12V) alimentant le réseau de bord du véhicule, la batterie haute tension (400V) alimentant le moteur électrique du véhicule via une électronique de puissance (onduleur), le chargeur ou encore le silencieux d'échappement, doivent être agencés au niveau de la partie arrière du soubassement du véhicule. Cet agencement doit tenir compte de différentes contraintes techniques et en particulier doit respecter les exigences d'un protocole d'essai de choc défini par le constructeur. Un tel protocole d'essai de choc impose par exemple de respecter des performances en termes de valeur maximale d'enfoncement du réservoir à carburant du véhicule suivant la direction longitudinale du véhicule, dans des conditions spécifiées de choc arrière, comme un choc arrière contre une barrière rigide de 1100 kg à une vitesse de 65 Km/h. Dans ces conditions, on souhaite limiter l'enfoncement du réservoir à une valeur maximale de 20 mm dans la direction longitudinale du véhicule.

Il peut également découler du protocole d'essai de choc une règle, consistant à fixer une limite théorique en X, soit suivant la direction longitudinale du véhicule, à l'arrière de laquelle la majeure partie de la déformation, dans les conditions spécifiées de choc arrière, doit être réalisée sur le véhicule. Cela implique donc de dissiper dans les longerons la majeure partie de l'énergie liée au choc. En déterminant la section des longerons et leur degré de compression sous l'effet de la dissipation des efforts du choc arrière dans les conditions spécifiées, on peut définir cette limite théorique en X. L'agencement des organes sensibles au niveau de la partie arrière du soubassement doit tenir compte de cette limite théorique.

Par ailleurs, s'agissant de véhicules hybrides rechargeables, les volumes de production de tels véhicules sont encore relativement faibles comparés aux véhicules conventionnels tout thermiques par exemple. Il est donc nécessaire de fournir une architecture technique de la partie arrière du soubassement, qui puisse être commune pour différentes gammes de véhicules hybrides rechargeables, de façon à réduire les coûts de production de ces véhicules.

On connaît des exemples d'agencement de partie arrière de structure sous caisse pour des véhicules hybrides rechargeables tels que l'exemple fourni par le véhicule Golf® GTE hybride rechargeable du constructeur automobile Volkswagen ou encore l'exemple fourni par le véhicule Prius® hybride rechargeable développé par le constructeur Toyota.

Toutefois, sur la Golf GTE, le réservoir à carburant est agencé en s'étendant significativement au-delà de l'axe des roues arrière vers l'arrière du véhicule, sur une distance d'environ 300 mm en arrière de l'axe des roues arrière, et la batterie 12V est située sur le côté latéral du réservoir. Un tel agencement ne permet pas de limiter l'enfoncement du réservoir à carburant à une valeur maximale souhaitée dans des conditions spécifiées de choc arrière, notamment dans les conditions indiquées précédemment.

Sur le véhicule Prius hybride rechargeable, le réservoir à carburant est disposé totalement en avant de l'axe des roues arrière du véhicule, mais la batterie haute tension du véhicule est agencée dans le coffre du véhicule. Il en résulte d'une part, une perte important du volume de coffre disponible, ce qui n'est pas souhaitable, et, d'autre part, un non respect de la contrainte d'agencement vis-à-vis de la limite théorique en X découlant du protocole d'essai de choc dans les conditions indiquées précédemment.

Aussi, il existe un besoin pour un agencement de partie arrière de structure sous caisse pour un véhicule automobile de type hybride rechargeable, qui soit susceptible de respecter les contraintes techniques de l'agencement eu égard à la dissipation des efforts en cas de choc arrière, en particulier dans les conditions de protocole d'essai de choc indiquées plus haut et qui permette de limiter la perte de volume utile dans le coffre du véhicule.

A cet effet, l'invention propose un agencement de partie arrière de structure sous caisse pour véhicule automobile hybride rechargeable comprenant un train arrière, un berceau arrière comportant une zone centrale s'étendant transversalement à une direction longitudinale du véhicule, prolongée à chacune de ses extrémités par deux bras, respectivement un bras avant et un bras arrière, sur lesquels des points de fixations sont prévus permettant d'assurer la fixation du berceau d'une part, avec la caisse et, d'autre part, avec le train arrière, une pluralité d'organes du véhicule parmi lesquels au moins une batterie basse tension, une batterie haute tension, un chargeur de batterie, un réservoir à carburant, et un silencieux d'échappement situé au bout d'une ligne d'échappement, étant agencés au niveau de ladite partie arrière de structure sous caisse, ledit agencement étant caractérisé en ce que la position des points de fixation au niveau des bras arrière du berceau arrière définit une position de référence suivant la direction longitudinale du véhicule, à l'arrière de laquelle ledit silencieux d'échappement est disposé et à l'avant de laquelle les autres organes de ladite pluralité d'organes du véhicule sont disposés.

De préférence, la position de référence selon la direction longitudinale du véhicule est définie avec une tolérance de 50 mm au plus en avant ou en arrière de la position des points de fixation au niveau des bras arrière du berceau arrière.

Selon un mode de réalisation, ledit réservoir à carburant est disposé strictement à l'avant de l'axe des roues arrière du véhicule.

En variante, le réservoir à carburant est disposé de sorte qu'une extrémité arrière dudit réservoir à carburant est située, suivant la direction longitudinale du véhicule, entre l'axe des roues arrière et une position située à 50 mm au plus et préférentiellement 40 mm, à l'arrière de l'axe des roues arrière.

Avantageusement, ledit réservoir à carburant est disposé entre ladite batterie basse tension et ladite batterie haute tension suivant la direction longitudinale du véhicule.

Avantageusement, ledit réservoir à carburant est disposé suivant la direction longitudinale du véhicule à l'opposé de ladite position de référence par rapport à ladite batterie basse tension.

De préférence, ledit réservoir à carburant, ladite batterie basse tension et ledit chargeur sont montés sur ledit berceau arrière.

Avantageusement, ledit réservoir à carburant présente une dimension suivant la direction verticale du véhicule supérieure à sa dimension suivant la direction longitudinale du véhicule.

De préférence, ledit réservoir à carburant comporte une cavité en partie inférieure pour assurer le passage de la ligne d'échappement jusqu'au silencieux d'échappement.

L'invention concerne également un véhicule automobile hybride rechargeable comprenant un agencement de partie arrière de structure sous caisse tel que décrit ci-dessus.

D'autres caractéristiques et avantages de l'invention ressortiront clairement de la description qui en est faite ci-après, à titre indicatif et nullement limitatif, en référence aux dessins annexés, dans lesquels:
- la figure 1 est une vue schématique en perspective de l'agencement de partie arrière de structure sous caisse selon l'invention, pour un véhicule automobile hybride rechargeable ;
- la figure 2 est une vue schématique en perspective illustrant en détail la partie de train arrière de l'agencement représenté à la figure 1 ;
- la figure 3 est une vue en coupe longitudinale de l'agencement de partie arrière de structure sous caisse illustré à la figure 1 ;
- la figure 4 est une vue schématique de dessous en perspective de l'agencement de partie arrière de structure sous caisse illustré à la figure 1 ;
- la figure 5 est une vue schématique de l'intérieur du coffre du véhicule automobile.

Ces Figures sont représentées selon des directions et orientations définies en référence à un repère XZY, dans lequel l'axe X est la direction longitudinale, d'avant en arrière, du véhicule, dirigée vers l'arrière, l'axe Y est la direction transversale du véhicule, dirigée vers la droite, et l'axe Z est la direction verticale du véhicule, dirigée vers le haut.

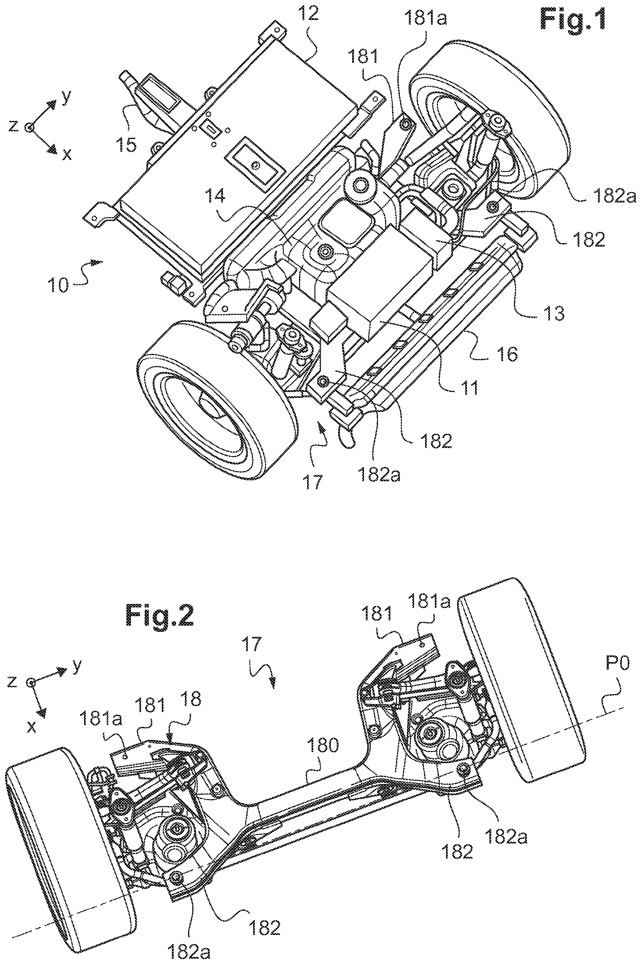

La figure 1 illustre donc l'agencement de la partie arrière 10 d'une structure sous caisse d'un véhicule automobile hybride rechargeable. Au niveau de cette partie arrière 10 de structure sous caisse, doivent être implantés plusieurs organes du véhicule automobile hybride rechargeable, parmi lesquels une batterie basse tension 11 (12V), une batterie haute tension 12 (400V), un chargeur 13, un réservoir à carburant 14, une ligne d'échappement 15 et un silencieux 16, situé au bout de la ligne d'échappement 15 et destiné à réduire les bruits d'évacuation des gaz d'échappement.

Selon l'architecture décrite à la figure 1, le véhicule comprend un train arrière 17, par exemple de type multibras. Comme illustré plus précisément en référence à la figure 2, le train arrière 17 comporte un berceau arrière 18, qui se situe sensiblement dans l'axe Y des roues arrière du véhicule et qui constitue une pièce de structure, préférentiellement métallique, permettant d'assurer la liaison entre d'une part, la caisse du véhicule et, d'autre part, le train arrière du véhicule. Ainsi, le berceau arrière 18 comporte une zone centrale 180, s'étendant transversalement à une direction longitudinale X du véhicule, sur laquelle sont fixés, à chaque extrémité, deux bras profilés 181, 182 respectivement un bras avant et un bras arrière, qui constituent des moyens de liaison respectivement avec la caisse et avec le train arrière. Pour ce faire, des points de fixations 181a, 182a sont prévus au niveau de chaque bras avant et arrière 181, 182 du berceau arrière 18, de manière à permettre d'assurer la fixation du berceau arrière 18 d'une part, avec la caisse et, d'autre part, avec le train arrière.

L'invention a notamment pour but d'implanter les organes 11 à 16 du véhicule décrits ci-dessus pour définir une architecture de partie arrière de structure sous caisse optimisée en regard de certaines contraintes techniques, en particulier ayant trait à la dissipation des efforts lors d'un choc arrière. Aussi, l'implantation de ces organes du véhicule va être réalisée en tenant compte notamment d'une position de référence P0 suivant la direction longitudinale X du véhicule, à l'avant de laquelle doivent nécessairement être positionnés les organes sensibles du véhicule, en particulier le réservoir à carburant 14, la batterie basse tension 11 et le chargeur 13.

Conformément à l'invention, comme illustré à la figure 2, cette position de référence en X P0 est définie par la position des points de fixation 182a au niveau des bras arrière 182 du berceau arrière 18. Autrement dit, la position de référence est définie par une ligne selon l'axe Y passant par les points de fixation 182a des bras arrière 182 du berceau arrière 18. De préférence, la position de référence est définie avec une tolérance de 50 mm au plus de part et d'autre de la position des points de fixation arrière du berceau arrière suivant l'axe longitudinal X du véhicule (notamment en fonction du poids du véhicule, du porte-à-faux arrière, de la carrosserie). La position de référence P0 ainsi définie est utilisée pour fixer l'implantation des organes du véhicule.

En premier lieu, le silencieux 16, qui est un élément compressible, est avantageusement disposé à l'arrière de la position de référence P0. Ainsi, par rapport à la position de référence P0, le silencieux 16 se situe vers l'arrière du véhicule, tandis que par rapport au silencieux 16, la position de référence P0 se situe vers l'avant du véhicule. Un tel agencement du silencieux 16 par rapport à la position de référence P0 permet de libérer de l'espace à l'avant de la position de référence P0, où sont avantageusement disposés les autres organes du véhicule parmi lesquels la batterie basse tension 11, la batterie haute tension 12, le chargeur 13, et le réservoir à carburant 14.

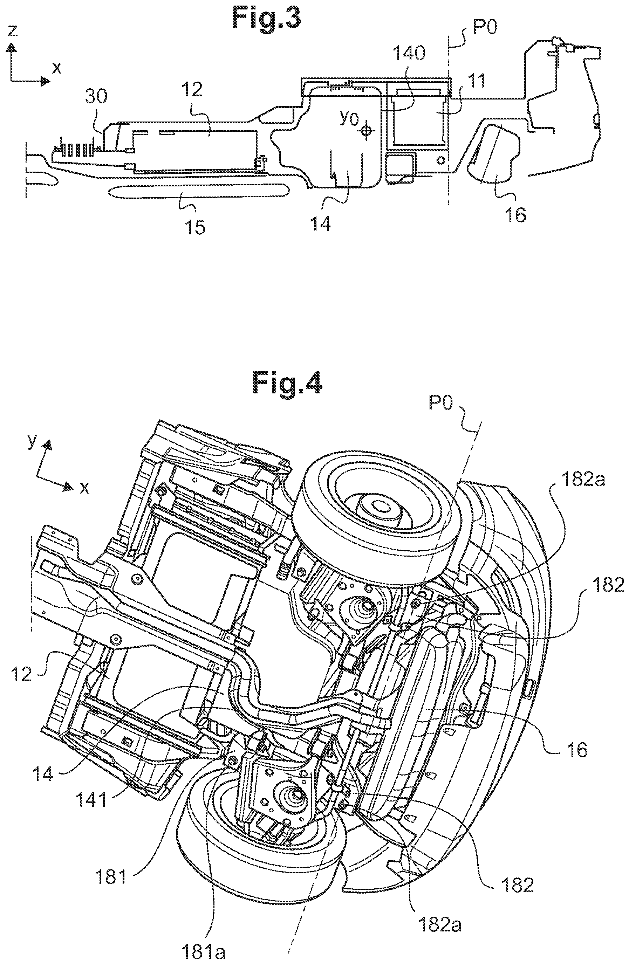

Comme illustré plus précisément à la figure 3, le réservoir à carburant 14 présente une paroi 140, qui s'étend transversalement à la direction longitudinale du véhicule lorsque le réservoir est implanté au niveau de la partie arrière de la structure sous caisse et qui définit l'extrémité arrière du réservoir dans l'agencement de la partie arrière de la structure sous caisse.

Selon un premier mode de réalisation, le réservoir à carburant 14 est implanté préférentiellement strictement à l'avant de l'axe Y0 des roues arrière. Autrement dit, le réservoir à carburant est implanté de telle sorte que l'extrémité arrière 140 du réservoir ne dépasse pas à l'arrière de l'axe des roues arrière Y0.

Selon un deuxième mode de réalisation plus précisément illustré à la figure 3, le réservoir à carburant 14 peut être disposé de sorte que son extrémité arrière 140 soit située, suivant la direction longitudinale X du véhicule, entre l'axe Y0 des roues arrière et une position située à 50 mm au plus et préférentiellement à 40 mm, à l'arrière de l'axe des roues arrière. Autrement dit, selon ce deuxième mode de réalisation, le réservoir à carburant 14 peut dépasser d'au plus 50 mm et préférentiellement de 40 mm à l'arrière de l'axe des roues arrière.

Un tel agencement du réservoir à carburant permet avantageusement de limiter l'enfoncement en X du réservoir à carburant 14, par exemple à une valeur maximale de 20 mm lors d'un choc arrière correspondant au protocole d'essai de choc spécifié en préambule.

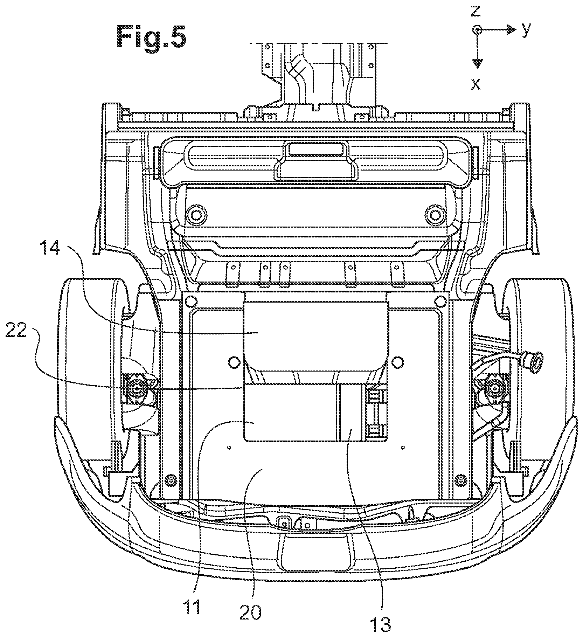

En outre, le réservoir à carburant 14 présente une dimension suivant la direction verticale du véhicule supérieure à sa dimension suivant la direction longitudinale du véhicule. Autrement dit, le réservoir à carburant 14 présente sa plus grande dimension suivant la direction verticale du véhicule. Autrement dit encore, le réservoir à carburant 14 présente une forme générale verticale, permettant, pour une capacité de stockage de carburant donnée, de réduire l'encombrement du réservoir à carburant suivant la direction longitudinale du véhicule. Il découle de la forme générale verticale du réservoir à carburant, procurant une meilleure compacité en X, que la partie supérieure du réservoir, sur laquelle est positionnée la bonde du réservoir, empiète dans le volume du coffre du véhicule, comme illustré à la figure 5. Ainsi, le coffre du véhicule présente un plancher 20, qui comporte une ouverture 22 dans laquelle fait saillie la partie supérieure du réservoir à carburant 14 et par laquelle un accès est fourni au réservoir et à la bonde du réservoir. En outre, cette ouverture 22 ménagée dans le plancher 20 du coffre est adaptée à procurer un accès à la batterie basse tension 11 du véhicule. L'implantation du réservoir à carburant 14 est telle que sa partie supérieure soit prévue pour empiéter dans le volume du coffre en position sensiblement centrale du coffre. Ainsi, le réservoir 14 fait saillie à travers l'ouverture 22 en position sensiblement centrale du coffre du véhicule. L'ouverture 22 est avantageusement recouverte par un coffrage (non représenté) fermant l'accès au réservoir 14. Ce coffrage constitue ainsi un bossage relié au plancher 20 du coffre du véhicule, dont le positionnement est sensiblement central dans le coffre du véhicule.

Selon une autre caractéristique de l'agencement selon l'invention, le réservoir à carburant 14 est disposé suivant la direction longitudinale X du véhicule à l'opposé de la position de référence P0 par rapport à la batterie basse tension 11. Autrement dit, la batterie basse tension 11 est située entre la position de référence P0 et le réservoir à carburant 14. Le chargeur 13 est implanté latéralement à la batterie basse tension 11. L'ensemble des organes constitué par le réservoir à carburant 14, la batterie basse tension 11 et le chargeur 13, est préférentiellement fixé sur le berceau arrière 18 du train arrière 17 du véhicule, au niveau de sa zone centrale 180, pour une meilleure compacité.

Le réservoir à carburant 14 est en outre positionné entre la batterie basse tension 11 et la batterie haute tension 12 suivant la direction longitudinale X du véhicule. La batterie haute tension 12 est en outre agencée de manière à s'étendre sous caisse entre le réservoir à carburant 14 et le pareclose, constitué d'une paroi de tôle 30 sensiblement verticale s'étendant transversalement par rapport à l'axe longitudinal du véhicule et formant une « marche » sous les assises des sièges arrière du véhicule.

Comme illustré plus précisément à la figure 4, l'agencement de la partie arrière de structure sous caisse du véhicule comporte la ligne d'échappement 15 du véhicule, prévue pour circuler sous les organes agencés dans cette partie arrière de structure sous caisse jusqu'au silencieux d'échappement 16 positionné à l'arrière de la position de référence en X P0. Le réservoir à carburant 14 présente un encombrement en Z augmenté pour limiter son encombrement en X à volume égal. Aussi, le réservoir à carburant 14 comporte une cavité 141 ménagée en partie inférieure du réservoir à carburant, dans laquelle la ligne d'échappement 15 est apte à être disposée de façon à assurer le passage de la ligne d'échappement 15 au travers la partie inférieure du réservoir 14 jusqu'au silencieux d'échappement 16.

## Revendications

1. Agencement de partie arrière (10) de structure sous caisse pour véhicule automobile hybride rechargeable comprenant un train arrière (17), un berceau arrière (18) comportant une zone centrale (180) s'étendant transversalement à une direction longitudinale (X) du véhicule, prolongée à chacune de ses extrémités par deux bras (181, 182), respectivement un bras avant et un bras arrière, sur lesquels des points de fixations (181a, 182a) sont prévus permettant d'assurer la fixation du berceau d'une part, avec la caisse et, d'autre part, avec le train arrière, une pluralité d'organes du véhicule parmi lesquels au moins une batterie basse tension (11), une batterie haute tension (12), un chargeur de batterie (13), un réservoir à carburant (14), et un silencieux d'échappement (16) situé au bout d'une ligne d'échappement (15), étant agencés au niveau de ladite partie arrière de structure sous caisse, la position des points de fixation (182a) au niveau des bras arrière (182) du berceau arrière (18) définissant une position de référence (P0) suivant la direction longitudinale (X) du véhicule, à l'arrière de laquelle ledit silencieux d'échappement (16) est disposé, et à l'avant de laquelle les autres organes de ladite pluralité d'organes du véhicule sont disposés, ledit réservoir à carburant (14) étant disposé entre ladite batterie basse tension (11) et ladite batterie haute tension (12) suivant la direction longitudinale du véhicule.

2. Agencement selon la revendication 1, la position de référence (P0) selon la direction longitudinale du véhicule étant définie avec une tolérance de 50 mm au plus en avant ou en arrière de la position des points de fixation (182a) au niveau des bras arrière du berceau arrière.

3. Agencement selon la revendication 1 ou 2, ledit réservoir à carburant (14) étant disposé strictement à l'avant de l'axe (Y0) des roues arrière du véhicule.

4. Agencement selon la revendication 1 ou 2, le réservoir à carburant (14) étant disposé de sorte qu'une extrémité arrière (140) dudit réservoir à carburant (14) est située, suivant la direction longitudinale du véhicule, entre l'axe des roues arrière (Y0) et une position située à 50 mm au plus et préférentiellement 40 mm, à l'arrière de l'axe des roues arrière.

5. Agencement selon l'une quelconque des revendications précédentes, ledit réservoir à carburant (14) étant disposé suivant la direction longitudinale du véhicule à l'opposé de ladite position de référence (P0) par rapport à ladite batterie basse tension (11).

6. Agencement selon l'une quelconque des revendications précédentes, ledit réservoir à carburant (14), ladite batterie basse tension (11) et ledit chargeur (13) étant montés sur ledit berceau arrière (18).

7. Agencement selon l'une quelconque des revendications précédentes, ledit réservoir à carburant (14) présentant une dimension suivant la direction verticale du véhicule supérieure à sa dimension suivant la direction longitudinale du véhicule.

8. Agencement selon l'une quelconque des revendications précédentes, ledit réservoir à carburant (14) comportant une cavité (141) en partie inférieure pour assurer le passage de la ligne d'échappement (15) jusqu'au silencieux d'échappement (16).

9. Véhicule automobile hybride rechargeable comprenant un agencement selon l'une quelconque des revendications précédentes.

## Patentansprüche

1. Anordnung des hinteren Teils (10) der Unterbodenstruktur für ein wiederaufladbares Hybridkraftfahrzeug, die eine Hinterachse (17) aufweist, eine hintere Halterung (18) mit einer in der Mitte befindlichen Zone (180), die sich quer zu einer Längsrichtung (X) des Fahrzeugs erstreckt und an jedem ihrer Enden durch zwei Arme (181, 182) verlängert wird, jeweils einem vorderen Arm und einem hinteren Arm, an denen Befestigungspunkte (181a, 182a) vorgesehen sind, um die Befestigung der der Halterung einerseits an der Karosserie und andererseits an der Hinterachse sicherzustellen, wobei eine Vielzahl von Fahrzeugkomponenten, darunter mindestens eine Niederspannungsbatterie (11), eine Hochspannungsbatterie (12), ein Batterieladegerät (13), ein Kraftstofftank (14) und ein Abgasschalldämpfer (16), der sich am Ende einer Abgasleitung (15) befindet, in Höhe des hinteren Teils der Unterbodenstruktur angeordnet sind und die Position der Befestigungspunkte (182a) in Höhe des hinteren Arms (182) der hinteren Halterung (18) eine Referenzposition (P0) in Längsrichtung (X) des Fahrzeugs definiert, hinter der der Abgasschalldämpfer (16) angeordnet ist, und vor der die anderen Komponenten der Vielzahl von Fahrzeugkomponenten angeordnet sind, wobei der Kraftstofftank (14) zwischen der Niederspannungsbatterie (11) und der Hochspannungsbatterie (12) in Längsrichtung des Fahrzeugs angeordnet ist.

2. Anordnung nach Anspruch 1, wobei die Referenzposition (P0) in Längsrichtung des Fahrzeugs mit einer Toleranz von höchstens 50 mm vor oder hinter der Position der Befestigungspunkte (182a) in Höhe der hinteren Arme der hinteren Halterung definiert wird.

3. Anordnung nach Anspruch 1 oder 2, wobei der Kraftstofftank (14) unbedingt vor der Achse (Y0) der Hinterräder des Fahrzeugs angeordnet ist.

4. Anordnung nach Anspruch 1 oder 2, wobei der Kraftstofftank (14) so angeordnet ist, dass ein hinteres Ende (140) des Kraftstofftanks (14) sich entsprechend der Längsrichtung des Fahrzeugs zwischen der Achse der Hinterräder (Y0) und einer Position befindet, die sich höchstens 50 mm und vorzugsweise 40 mm hinter der Achse der Hinterräder befindet.

5. Anordnung nach einem der vorhergehenden Ansprüche, wobei der Kraftstofftank (14) in Längsrichtung des Fahrzeugs entgegengesetzt zu der Referenzposition (P0) in Bezug auf die Niederspannungsbatterie (11) angeordnet ist.

6. Anordnung nach einem der vorhergehenden Ansprüche, wobei der Kraftstofftank (14), die Niederspannungsbatterie (11) und das Ladegerät (13) an der hinteren Halterung (18) angebracht sind.

7. Anordnung nach einem der vorhergehenden Ansprüche, wobei der Kraftstofftank (14) eine Abmessung in Vertikalrichtung des Fahrzeugs aufweist, die größer ist als seine Abmessung in Längsrichtung des Fahrzeugs.

8. Anordnung nach einem der vorhergehenden Ansprüche, wobei der Kraftstofftank (14) im unteren Teil einen Hohlraum (141) aufweist, um den Durchgang der Abgasleitung (15) zum Abgasschalldämpfer (16) sicherzustellen.

9. Wiederaufladbares Hybridkraftfahrzeug, das eine Anordnung nach einem der vorhergehenden Ansprüche aufweist.

## Claims

1. Arrangement of the rear portion (10) of an underbody structure for a rechargeable hybrid motor vehicle comprising a rear suspension (17), a rear cradle (18) having a central zone (180) extending transversally across a longitudinal direction (X) of the vehicle, extended at each of the ends thereof by two arms (181, 182), respectively a front arm and a rear arm, on which attachment points (181a, 182a) are provided allowing the cradle to be attached firstly to the body and secondly to the rear suspension, a plurality of members of the vehicle including at least a low-voltage battery (11), a high-voltage battery (12), a battery charger (13), a fuel tank (14) and an exhaust silencer (16) arranged at the end of an exhaust line (15) being arranged in said rear portion of the underbody structure, the position of the attachment points (182a) on the rear arms (182) of the rear cradle (18) defining a reference position (P0) in the longitudinal direction (X) of the vehicle, to the rear of which said exhaust silencer (16) is arranged, and to the front of which the other members of said plurality of members of the vehicle are arranged, said fuel tank (14) being arranged between said low-voltage battery (11) and said high-voltage battery (12) in the longitudinal direction of the vehicle.

2. Arrangement according to Claim 1, the reference position (P0) in the longitudinal direction of the vehicle being determined with a tolerance of at most 50 mm in front of or behind the position of the attachment points (182a) on the rear arms of the rear cradle.

3. Arrangement according to Claim 1 or 2, said fuel tank (14) being arranged strictly in front of the axis (Y0) of the rear wheels of the vehicle.

4. Arrangement according to Claim 1 or 2, the fuel tank (14) being arranged such that a rear end (140) of said fuel tank (14) is positioned, in the longitudinal direction of the vehicle, between the axis of the rear wheels (Y0) and a position at most 50 mm and preferably 40 mm behind the axis of the rear wheels.

5. Arrangement according to any one of the preceding claims, said fuel tank (14) being arranged in the longitudinal direction of the vehicle opposite said reference position (P0) in relation to said low-voltage battery (11).

6. Arrangement according to any one of the preceding claims, said fuel tank (14), said low-voltage battery (11) and said charger (13) being mounted on said rear cradle (18).

7. Arrangement according to any one of the preceding claims, said fuel tank (14) having a dimension in the vertical direction of the vehicle that is greater than the dimension thereof in the longitudinal direction of the vehicle.

8. Arrangement according to any one of the preceding claims, said fuel tank (14) having a cavity (141) in the lower portion that enables the exhaust line (15) to pass through to the exhaust silencer (16).

9. Rechargeable hybrid motor vehicle including an arrangement according to any one of the preceding claims.
